# EUROPEAN PATENT APPLICATION

(11) **EP 2 562 729 A2**
(43) Date of publication of application: **27.02.2013**
(21) Application number: 12181296.0
(22) Date of filing: 22.08.2012
(51) Int. Cl.: G07F 15/00

(54) **System and method for use when charging an electrically powered vehicle**

(30) Priority: 23.08.2011 US 201113215721
(71) Applicant: General Electric Company, Schenectady, NY 12345 (US)
(72) Inventor: Strickland, Thomas E., Newnam, GA Georgia 30265-3332 (US)
(74) Representative: Picker, Madeline Margaret

(57) **Abstract**

A system (101) for use in authorizing charging of an electrically powered vehicle (205) includes a smart grid (100/106) that includes an advanced metering infrastructure (AMI) system (100). The AMI system includes at least one credential reading device (245) coupled to a charging device (210) for an electrically powered vehicle (205). The at least one credential reading device is configured to transmit credential information. The AMI system also includes a server system (102) that includes at least one server (110) coupled to the at least one credential reading device via a communications network (106). The at least one server is configured to determine validity of the credential information transmitted from the at least one credential reading device. The at least one server is further configured to one of permit and deny charging of the electrically powered vehicle.

## Description

### BACKGROUND OF THE INVENTION

The subject matter disclosed herein relates generally to charging electrically powered vehicles and, more specifically, to systems and methods for use prior to initiating operation of a vehicle charging device.

Electrically powered vehicles, including electric vehicles and plug-in hybrid electric vehicles, include electric motors powered by energy storage devices, such as batteries. An energy storage device is depleted of energy as the motor operates, requiring the operator of the vehicle to recharge the energy storage device.

At least some known vehicle charging devices are designed for private use and charge the energy storage device when connected to the vehicle, without requiring authentication or authorization of the user. Such private-use charging devices may be unsuitable for unrestrained access and use in a publicly accessible location, for example, public and private parking lots, because such use may impose a utility cost to the party responsible for the charging device. Moreover, private-use charging devices may also be unsuitable in residential settings due to unrestrained access. For example, in those instances, unauthorized use of such charging devices may be possible. Regardless of who uses the device, the owner of the device may be billed and held financially liable for the electric power used for the vehicle charging event.

Also, at least some known vehicle charging devices are coupled to transaction systems that include specialized equipment to identify and/or authenticate the user and to authorize the charging of vehicles, thereby enabling multiple users of vehicle charging devices to be responsible for their own charging costs. However, such systems require additional infrastructure that increases capital and operational costs of implementation and installation. Moreover, malfunctions of the specialized equipment may inconvenience both the owner/operator of the vehicle charging devices, as well as the customers. Furthermore, such transaction systems may be provided by third parties, and malfunctions of the third-party specialized equipment may exacerbate the inconvenience to both the owner/operator of the vehicle charging devices as well as the customers. Also, such transaction systems may include multiple third-parties, thereby resulting in processing delays, further frustrating owners and users.

### BRIEF DESCRIPTION OF THE INVENTION

In one aspect, a system is provided. The system is configured for use in authorizing charging of an electrically powered vehicle. The system includes a smart grid that includes an advanced metering infrastructure (AMI) system. The AMI system includes at least one credential reading device coupled to a charging device for an electrically powered vehicle. The at least one credential reading device is configured to transmit credential information. The AMI system also includes a server system that includes at least one server coupled to the at least one credential reading device via a communications network. The at least one server is configured to determine validity of the credential information transmitted from the at least one credential reading device. The at least one server is further configured to one of permit and deny charging of the electrically powered vehicle.

In another aspect, a method for use in charging an electrically powered vehicle is provided. The method includes transmitting user credential information from a vehicle charging system to at least one server over a smart grid communications network that includes an advanced metering infrastructure (AMI) system. The method also includes determining a validity of the user credential information transmitted from the vehicle charging system. The method further includes one of permitting and denying a charge of the electrically powered vehicle by the user at the vehicle charging system.

In yet another aspect, one or more non-transitory computer-readable storage media is provided. The computer-readable storage media has computer-executable instructions embodied thereon. Such instructions cause the at least one processor to collect user credential information from a credential reading device when executed by at least one processor. The instructions also cause the at least one processor to transmit the user credential information from the credential reading device over a smart grid communications network that includes an advanced metering infrastructure (AMI) system when executed by at least one processor. The instructions further cause the at least one processor to determine a validity of the user credential information transmitted from the credential reading device when executed by at least one processor. The instructions also cause the at least one processor to either permit or deny a charge of an electrically powered vehicle by a user at a vehicle charging system associated with the credential reading device when executed by at least one processor.

### BRIEF DESCRIPTION OF THE DRAWINGS

The embodiments described herein may be better understood by referring to the following description in conjunction with the accompanying drawings.
FIG. 1 is a simplified block diagram of a typical server architecture of an Advanced Metering Infrastructure (AMI) system that includes features that facilitate recharging an electrically powered vehicle (EV);
FIG. 2 is a block diagram of an example configuration of a user computer device for use with the AMI system shown in FIG. 1;
FIG. 3 is a block diagram of an example configuration of a server computer device for use with the AMI system shown in FIG. 1;
FIG. 4 is a block diagram of an example vehicle charging system for use with the AMI system shown in FIG. 1;
FIG. 5 is a block diagram of a plurality of example authorization and transaction relationships that may be used with the AMI system shown in FIG. 1 and the vehicle charging system shown in FIG. 4; and
FIG. 6 is a flowchart of an example method for use in initiating charging of an electrically powered vehicle using the vehicle charging system shown in FIG. 4 and the AMI system shown in FIG. 1.

### DETAILED DESCRIPTION OF EMBODIMENTS OF THE INVENTION

As used herein, the term "electrically powered vehicle" refers generally to a vehicle that includes one or more electric motors that are used for propulsion. Energy used to propel electrically powered vehicles may come from various energy storage devices, such as, but not limited to, an on-board rechargeable battery, a capacitor, and/or an on-board fuel cell. In one embodiment, the electrically powered vehicle is a hybrid electric vehicle, which may include both an electric motor and a combustion engine. In another embodiment, an electrically powered vehicle is an electric vehicle, which may include only an electric motor for propulsion. Electrically powered vehicles may capture and store energy generated, for example, by braking. Moreover, some electrically powered vehicles are capable of recharging the energy storage device from a power receptacle, such as a power outlet. Accordingly, the term "electrically powered vehicle" as used herein may refer to any vehicle that includes an energy storage device to which electrical energy may be delivered, for example, via a power grid.

As used herein, the term "smart grid" refers generally to a form of electric power delivery network utilizing digital technology. A smart grid overlays the existing electric power grid with an information and metering system, sometimes referred to as an Advanced Metering Infrastructure (AMI) system that includes communications networks and database systems. AMI systems also include devices that include "smart meters" and facilitate two-way communications with devices that include such "smart meters" via the communications networks. Therefore, as used herein, the term "smart grid" and AMI are used interchangeably.

As used herein, a "smart meter" is an electrical meter that records consumption in predetermined intervals and communicates that information at predetermined intervals to the utility for monitoring and billing purposes. Such smart meters enable two-way communication between the meter and the utility, thereby facilitating utility companies to respond more quickly to potential problems and to communicate real-time electricity prices to the consumers. These price signals may provide consumers with financial incentives to reduce their electricity usage. More specifically, a smart grid delivers electricity from suppliers to consumers using the two-way digital communications of the AMI system integrated therein to facilitate reducing energy consumption as a function of time and energy pricing. Such communication may facilitate reducing costs to consumers and increasing power grid reliability by better controlling overall consumption.

Also, the AMI system is an intelligent monitoring system that keeps track of all electricity flowing in the portion of the electric power grid operated by the utility. Further, when power is least expensive as communicated to the consumer by the AMI system, the consumer can permit the smart grid to turn on selected home appliances that can run at arbitrary hours, such as, washing machines and factory processes. Moreover, at peak times, the smart grid could turn off selected appliances to reduce demand.

The communications networks associated with the smart grids, smart meters, and AMI systems described herein use an encrypted, secure AMI interface that may, or may not, be wireless. Moreover, such communications networks form at least a portion of the secure backbone of the AMI systems described herein.

As used herein, the term "memo posted" refers generally to the batch processing method used in traditional computerized banking environments. When a pending transaction is memo posted, a temporary credit or debit transaction/entry is made to an account for which the complete posting to update the balance will be done as part of the end-of-day batch processing. The temporary transaction created as part of the memo posting will be reversed/removed after the actual transaction is posted in batch processing.

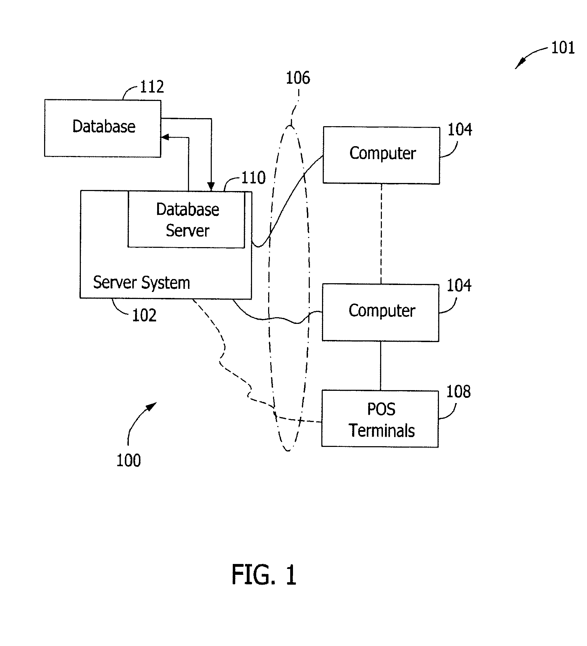

FIG. 1 is a simplified block diagram of a typical server architecture of a smart grid, e.g., an Advanced Metering Infrastructure (AMI) system 100 that includes features that facilitate recharging an electrically powered vehicle (EV) (not shown in FIG. 1). In the example embodiment, AMI system 100 forms at least a portion of a larger system 101 that may include hardware and software beyond the scope of the instant disclosure.

Also, in the example embodiment, AMI system 100 facilitates verifying of a user identification, authorizing of a charging purchase, and logging the associated transaction to the appropriate account. Specifically, AMI system 100 facilitates ensuring that a person attempting to use a transaction card, or the corresponding account numbers, is the legitimate cardholder. Also, specifically, AMI system 100 facilitates substantially immediate authorization to use the associated EV charging device. Further, AMI system 100 facilitates directing the associated billing for charging the EV to billing statements that include, without limitation, one of a utility billing statement, a credit card billing statement, a bank debit card account, and a hotel room billing statement. More specifically, in the example embodiment, AMI system 100 includes a server system 102 communicatively coupled to a plurality of client systems 104, which may include one or more input devices (not shown in FIG. 1). Server system 102 may also be referred to as an interchange computer system or an AMI host. Server system 102 may be associated with any organization that processes financial transactions and may include, without limitation, electric utility servers and/or servers of third-party service providers, hotel servers, credit card company servers, and bank debit card servers.

In the example embodiment, client systems 104 are computers that include a web browser, which enable client systems 104 to access server system 102 using a smart grid communications network 106 integrated within AMI system 100. At least a portion of communications network 106 forms a backbone of AMI system 100. More specifically, client systems 104 are communicatively coupled to server system 102 through at least one of many possible interfaces including, without limitation, at least one of a dedicated smart grid network, the Internet, a local area network (LAN), a wide area network (WAN), and/or an integrated services digital network (ISDN), a dial-up-connection, a digital subscriber line (DSL), and a cable modem. Client systems 104 can be any device capable of accessing server system 102 including, without limitation, a desktop computer, a laptop computer, a personal digital assistant (PDA), a smart phone, or other web-based connectable equipment.

AMI system 100 also includes a plurality of point of sale (POS) terminals 108, which are communicatively coupled to client systems 104 and server system 102. POS terminals 108 are interconnected to server system 102 through at least one of many possible interfaces including, without limitation, at least one of a dedicated smart grid network, the Internet, a local area network (LAN), a wide area network (WAN), and/or an integrated services digital network (ISDN). POS terminals 108 are any devices capable of interconnecting to server system 102 and include an input device (not shown in FIG. 1) capable of reading information from a consumer's card. Alternatively, or in addition, POS terminals 108 may include merchant computer systems that interact with a remote user, such as through a merchant website.

Also, in the example embodiment, a database server 110 is communicatively coupled to a database 112 that contains a variety of information including, but not limited to, a name of a cardholder, an account number, a transaction history, an item purchase history, a billing address, a shipping address, the cardholder's date of birth, telephone number(s) associated with the cardholder (e.g., a mobile, home, or fax telephone number), email addresses associated with the cardholder, serial number of the EV, and other cardholder-related information. Moreover, database 112 can include multiple account numbers for an account holder. In addition, each particular account number can have its own corresponding set of information specific for the particular account number. For example, different account numbers can have different mailing addresses associated therewith. In the example embodiment, database 112 is stored remotely from server system 102. In an alternate embodiment, database 112 may be decentralized. In the example embodiment, a person can access database 112 via client systems 104 by logging onto server system 102.

Further, in the example embodiment, database 112 also includes information relating to an authentication protocol. The authentication protocol in these embodiments may be utilized by other financial transaction card companies as well the billing source for the charge of the EV. The authentication protocol defines a standard for utilizing authentication credentials that includes, without limitation, a user name and/or password and digital information encoded on a magnetic strip, to verify the identity of a user of a card (not shown in FIG. 1). The card may include, without limitation, a financial transaction card, a utility charge card, a commercial credit card, a debit card, and a hotel room key card. The standard for utilizing authentication credentials includes, for example, procedures for establishing the credentials, procedures for requesting and verifying the veracity of the credentials, and standards for communicating the results of the verification of the credentials to the directory server (e.g., interchange network) and/or the issuing bank/utility/hotel. Protocols in general are commonly recognized as a set of rules governing the format of messages that are exchanged between computers. For example, a protocol may be a specific set of rules, procedures, or conventions relating to format and timing of data transmission between two devices.

The embodiments illustrated and described herein as well as embodiments not specifically described herein but within the scope of aspects of the disclosure constitute example means for performing a transaction, and more particularly, constitute example means for authenticating a payer in a transaction using a card and authorizing use of an EV charging device. For example, server system 102, POS terminal 108, client system 104, or any other similar computer device, programmed with computer-executable instructions to execute processes and techniques with a processor as described herein, constitutes example means for authenticating a user of a card according to an authentication protocol and authorizing use of an EV charging device.

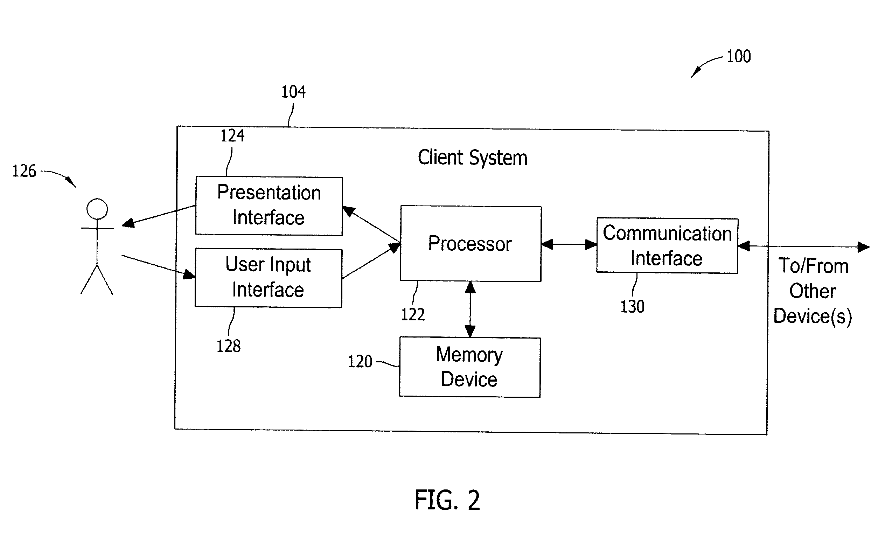

FIG. 2 is a block diagram of an example configuration of a user computer device, e.g., client system 104, for use with AMI system 100. Client system 104 includes a memory device 120 and a processor 122 operatively coupled to memory device 120 for executing instructions. In some embodiments, executable instructions are stored in memory device 120. Client system 104 is configurable to perform one or more operations described herein by programming processor 122. For example, processor 122 may be programmed by encoding an operation as one or more executable instructions and providing the executable instructions in memory device 120. Processor 122 may include one or more processing units (e.g., in a multi-core configuration).

In the example embodiment, memory device 120 is one or more devices that enable storage and retrieval of information such as executable instructions and/or other data. Memory device 120 may include one or more computer readable media, such as, without limitation, dynamic random access memory (DRAM), static random access memory (SRAM), a solid state disk, and/or a hard disk. Memory device 120 may be configured to store transactional and/or account information including, without limitation, a name of a cardholder, an account number, a transaction history, an item purchase history, a billing address, serial number of the EV (not shown in FIG. 2), and other cardholder-related information. In some embodiments, processor 122 removes or "purges" data from memory device 120 based on the age of the data. For example, processor 122 may overwrite previously recorded and stored data associated with a subsequent time and/or event. In addition, or alternatively, processor 122 may remove data that exceeds a predetermined time interval.

In some embodiments, client system 104 includes a presentation interface 124 coupled to processor 122. Presentation interface 124 presents information, such as a user interface and/or an alarm, to a user 126. For example, presentation interface 124 may include a display adapter (not shown) that may be coupled to a display device (not shown), such as a cathode ray tube (CRT), a liquid crystal display (LCD), an organic LED (OLED) display, and/or an "electronic ink" display. In some embodiments, presentation interface 124 includes one or more display devices. In addition, or alternatively, presentation interface 124 may include an audio output device (not shown) (e.g., an audio adapter and/or a speaker).

In some embodiments, client system 104 includes a user input interface 128. In the example embodiment, user input interface 128 is coupled to processor 122 and receives input from user 126. User input interface 128 may include, for example, a keyboard, a pointing device, a mouse, a stylus, and/or a touch sensitive panel (e.g., a touch pad or a touch screen). A single component, such as a touch screen, may function as both a display device of presentation interface 124 and user input interface 128.

A communication interface 130 is coupled to processor 122 and is configured to be coupled in communication with one or more other devices, such as server system 102 (shown in FIG. 1), another client system 104, and POS terminals 108 (shown in FIG. 1). Communication interface 130 performs input and output (I/O) operations with respect to such devices. For example, communication interface 130 may include, without limitation, a wired network adapter, a wireless network adapter, a mobile telecommunications adapter, a serial communication adapter, and/or a parallel communication adapter. Communication interface 130 may receive data from and/or transmit data to one or more remote devices. For example, a communication interface 130 of one client system 104 may transmit transaction information to communication interface 130 of another client system 104.

Presentation interface 124 and/or communication interface 130 are both capable of providing information suitable for use with the methods described herein (e.g., to user 126 or another device). Accordingly, presentation interface 124 and communication interface 130 may be referred to as output devices. Similarly, user input interface 128 and communication interface 130 are capable of receiving information suitable for use with the methods described herein and may be referred to as input devices.

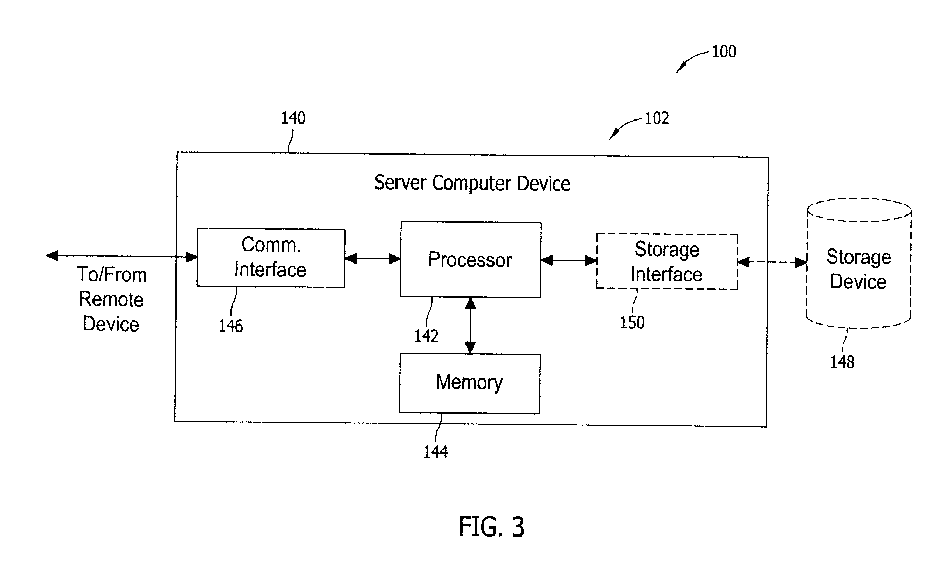

FIG. 3 is a block diagram of an example configuration of a server computer device 140 for use with AMI system 100, and more specifically, server system 102. Server computer device 140 may include, without limitation, a merchant computer system (not shown), POS terminal 108, and database server 110 (both shown in FIG. 1).

Server computer device 140 also includes a processor 142 for executing instructions. Instructions may be stored in a memory device 144, for example. Processor 142 may include one or more processing units (e.g., in a multi-core configuration). Memory device 144 may also include cardholder information (e.g., contact information), account information, authentication program enrollment information, access credential information, transaction information, and/or any other information relevant for processing and/or authentication of a transaction.

Processor 142 is operatively coupled to a communication interface 146 such that server computer device 140 is capable of communicating with a remote device such as client system 104 or another server computer device 140. For example, communication interface 146 may receive requests from client system 104 via communications network 106 (shown in FIG. 1).

Processor 142 may also be operatively coupled to a storage device 148. Storage device 148 is any computer-operated hardware suitable for storing and/or retrieving data, such as, but not limited to, data associated with database 112. In some embodiments, storage device 148 is integrated in server computer device 140. For example, server computer device 140 may include one or more hard disk drives as storage device 148. In other embodiments, storage device 148 is external to server computer device 140 and may be accessed by a plurality of server computer devices 140. For example, storage device 148 may include multiple storage units such as hard disks and/or solid state disks in a redundant array of inexpensive disks (RAID) configuration. Storage device 148 may include a storage area network (SAN) and/or a network attached storage (NAS) system.

In some embodiments, processor 142 is operatively coupled to storage device 148 via a storage interface 150. Storage interface 150 is any component capable of providing processor 142 with access to storage device 148. Storage interface 150 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 142 with access to storage device 148.

Computer devices such as client system 104 and server computer device 140 may be grouped together in a computer system. For example, a computer system may be created by connecting a plurality of server computer devices 140 and/or client systems 104 to a single network. Alternatively, one or more computer devices operable by a single user may be considered a computer system.

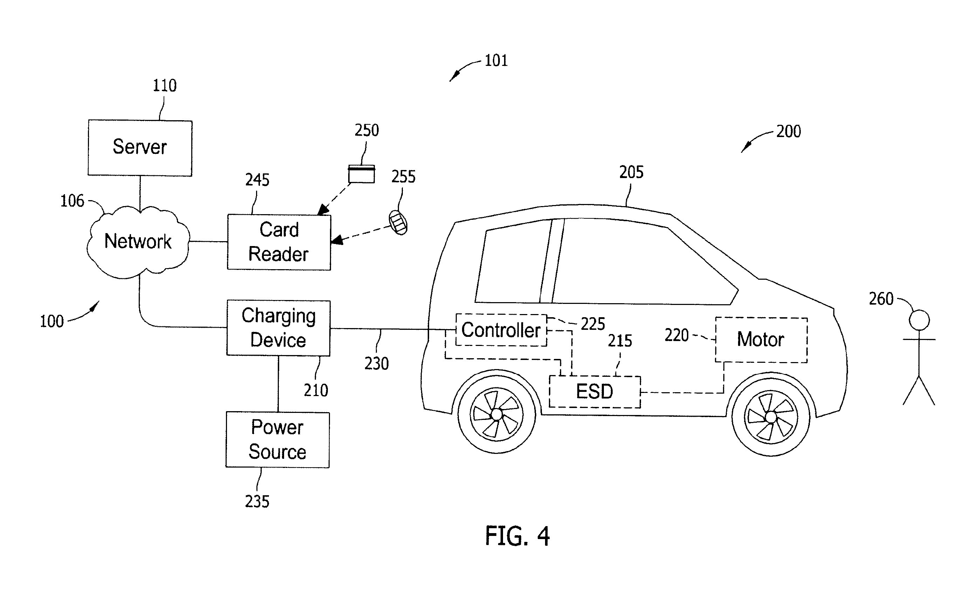

FIG. 4 is a block diagram of an example vehicle charging system 200 for use with system 101, including AMI system 100. System 200 charges, or provides electricity to, an electrically powered vehicle (EV) 205. In the example embodiment, system 200 includes a charging device 210 that may be coupled to EV 205. Also, in the example embodiment, EV 205 includes at least one energy storage device 215, such as a battery and/or a capacitor, coupled to a motor 220. Furthermore, EV 205 includes a vehicle controller 225 coupled to energy storage device 215.

Further, in the example embodiment, charging device 210 is removably coupled to energy storage device 215 and to vehicle controller 225 via at least one power conduit 230. Alternatively, charging device 210 may be coupled to energy storage device 215 and/or vehicle controller 225 via any other conduit or conduits, and/or charging device 210 may be coupled to vehicle controller 225 via a wireless data link (not shown). In an example embodiment, power conduit 230 includes at least one conductor (not shown) for supplying electricity to energy storage device 215 and/or to any other component within EV 205, and at least one conductor (not shown) for transmitting data to and receiving data from vehicle controller 225 and/or any other component within EV 205. Alternatively, power conduit 230 may include a single conductor that transmits and/or receives power and/or data, or any other number of conductors that enables system 200 to function as described herein. Moreover, in the example embodiment, charging device 210 is coupled to an electric power source 235, such as a power grid of an electric utility company, a generator, a battery, and/or any other device or system capable of providing electricity to charging device 210.

In the example embodiment, charging device 210 is coupled in communication with at least one database server 110 and a credential reading device, or card reader 245 through network 106. Server 110, in the example embodiment, communicates with charging device 210, for example, by transmitting a signal to charging device 210 to authorize payment and/or to initiate delivery of electricity to energy storage device 215, to access customer information, and/or to perform any other function that enables system 200 to function as described herein. Also, in the example embodiment, card reader 245 may be physically integrated with charging device 210. Alternatively, card reader 245 is operatively coupled to charging device 210 and positioned a predetermined distance away from device 210. For example, charging device 210 may be positioned near a curb (not shown) while card reader 245 is positioned on a wall (not shown) in close physical proximity to charging device 210.

Further, in the example embodiment, card reader 245 is configured to receive a card 250. Card 250 is any card-type device that includes user credential information, or credentials and enables operation of AMI system 100 as described, including, without limitation, a financial transaction card, a utility-provided card, a credit card, a debit card, a hotel key card, and any other device capable of communicating credentials, such as payment account information (e.g., an account number), to server system 102 (shown in FIGs. 1 and 3). In one embodiment, card reader 245 includes a magnetic strip reader (not shown) that reads credentials from a magnetic strip of card 250. In some embodiments, card reader 245 may also be configured to receive information from a wireless transmission device 255. For example, wireless transmission device 255 may include, without limitation, a keyless entry and/or ignition transmitter or "key fob" associated with vehicle 205, a mobile telephone, and/or any other device capable of wirelessly transmitting a signal compatible with AMI system 100 to facilitate the user authorization and payment acceptance needed to initiate charging of EV 205. In some alternative embodiments, card reader 245 may receive credentials entered by a user 260 (e.g., via a keyboard and/or a touch screen). Regardless of the method of entry, user credentials are transmitted through AMI system 100 as encrypted credential information.

Moreover, in the example embodiment, charging device 210 and/or card reader 245 include sufficient resources (not shown) to store and execute computer code programmed therein, thereby defining at least one computer readable medium (not shown) therein. The computer readable medium may include one or more memory/storage components including, without limitation, random access memory (RAM), read only memory (ROM), flash ROM, and erasable programmable read only memory (EPROM). Furthermore, charging device 210 and/or card reader 245 includes sufficient processing circuit (not shown) to execute the programmable instructions on the computer readable medium. Each vehicle charging system 200, and more specifically, each charging device 210 and/or card reader 245 may include unique programmed instructions and data that facilitate customizing each system 200. Such customization may include, without limitation, a unique serial number and unique charging parameters.

During operation, in the example embodiment, user 260 couples energy storage device 215 to charging device 210 with power conduit 230. User 260 may interact with charging device 210, such as by carrying wireless transmission device 255 within the proximity of charging device 210. User 260 may also interact with charging device 210 by initiating a transmission by wireless transmission device 255. User 260 may further interact with charging device 210 by running card 250 through card reader 245. Moreover, user 260 may interact with charging device 210 by accessing a user interface (not shown) of charging device 210 to enter information, such as payment information, and/or to initiate power delivery to energy storage device 215.

Charging device 210 is configured to communicate with server system 102, for example, to determine whether wireless transmission device 255 is associated with a charging authorization, to authenticate user 260, to process the payment information, and/or to initiate a transaction based on the electrical energy provided. If charging device 210 receives a signal from server system 102 that indicates approval or authorization to deliver power to energy storage device 215, charging device 210 receives power from electric power source 235 and provides the power to energy storage device 215 through power conduit 230. When energy storage device 215 has been charged to a desired level, charging device 210 ceases delivering power to energy storage device 215, and user 260 disengages power conduit 230 from energy storage device 215.

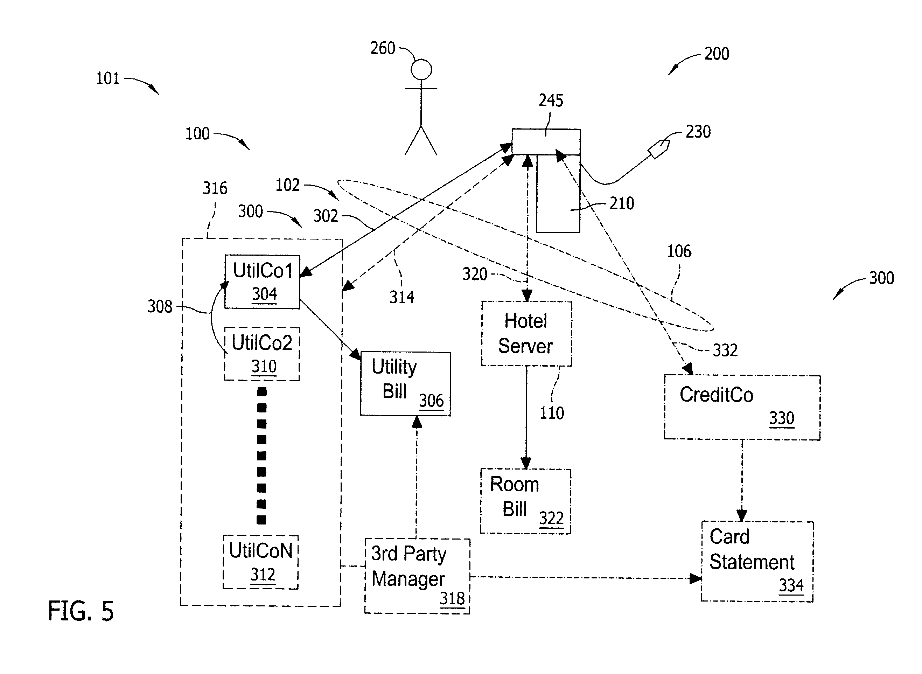

FIG. 5 is a block diagram of a plurality of example authorization and transaction relationships 300 that may be used with system 101, including AMI system 100 and vehicle charging system 200. As described herein, some of servers systems 102, including servers 110, (both shown in FIG. 1) may be directly associated with AMI system 100, while others may be more closely associated with system 101 and merely have some peripheral interface with AMI system 100.

A utility company (hereinafter, "UtilCo") relationship 302 includes vehicle charging system 200 communicatively coupled to a first UtilCo, i.e., UtilCo1 304, via communications network 106. In at least some embodiments of AMI system 100, relationship 302 exists between UtilCo1 304 and user 260 that is a residential consumer. In such embodiments, vehicle charging system 200 is positioned on the residential property (not shown) of a customer of UtilCo1 304, and UtilCo1 304 owns vehicle charging system 200. Also, in such embodiments, the residence includes a first electric power line and a first smart meter (neither shown) for legacy electric power needs of the residence. Moreover, the residence includes a second electric power line and a second smart meter (neither shown) for vehicle charging system 200. In some such embodiments, UtilCo1 304 assumes the risk of payment from the owner of the residence for charging of EV 205 (shown in FIG. 4) by the owner of the residence, who may or may not be the owner of EV 205. UtilCo1 304 generates and transmits the billing for such charging of EV 205 via a standard utility bill 306. Further, in some such embodiments, UtilCo1 304 may elect to use those smart grid features that allow UtilCo1 304 to disrupt charging of EV 205 if localized electric power demand and/or loading of local transmission and distribution (T&D) equipment (not shown) needs to be maintained at a predetermined value to avoid potential overloading of the local T&D system.

In at least some embodiments of relationship 302, vehicle charging system 200 installed on residential property includes card reader 245. The owner of the residence may have a card 250 (shown in FIG. 4) issued by UtilCol 304 to authorize and facilitate billing of the charging activities associated with each charge of EV 205. Also, the owner of the residence may allow other users 260 to use the residential vehicle charging system 200 using the credential of the owner of the residence. Alternatively, the owner of the residence may elect to have other users 260 use their card, whether it be issued from UtilCo1 304, or any other issuer, for example, without limitation, a credit card company. Use of card reader 245 facilitates security against unauthorized use of vehicle charging system 200, especially if system 200 is located outside on the residential premises. Alternatively, UtilCo1 304 and the owner of the residence may elect to not have card reader 245 and each charge of EV 205 will be billed to the residential owner, regardless of who the user is and which EV 205 is charged.

Also, in such embodiments of relationship 302, UtilCo1 304 may elect to not accept the risk of non-payment from customers not in good standing. For example, for known customers having outstanding delinquent bills, UtilCo1 304 may not permit their authorization, and UtilCo1 304 may have a default "not accepted" selection for such customers. However, UtilCo1 304 may elect to offer a default alternative payment option of using a credit card or a debit card. Use of credit cards and debit cards is discussed further below.

Alternative embodiments may include a relationship 308 between UtilCo1 304 and a second utility company, i.e., UtilCo2 310. Such relationship 308 may include neighboring utilities, e.g., UtilCo1 304 and UtilCo2 310, having a sharing arrangement between them. For example, given a scenario wherein a customer of UtilCo1 304 desires to charge EV 205 using a vehicle charging system 200 owned and operated by UtilCo2 310, 80% of the revenue generated by that charging activity will go to the utility carrying the charging burden of EV 205, i.e., UtilCo2 310. Therefore, 20% of the revenue generated by that charging activity will go to the utility partner not actually providing electricity, but providing the administrative overhead of carrying that customer, i.e., UtilCo1 304. Such a sharing relation similar to relationship 308 may be scalable between N utility companies, e.g., from UtilCo1 304 through a UtilCoN 312 to define a relationship 314 of a consortium 316 of utility companies that may extend state-wide, region-wide, and/or nation-wide.

Other alternative embodiments may include a third party manager 318 contracted to one or more of UtilCo1 304, UtilCo2 310, UtilCoN 312, and consortium 316. Third party manager 318 will assume some or all of the administrative burden of managing charging systems 200, and authorization and billing of charging activities for EV 205.

Utility bill 306 may include billing associated with charging EV 205 that includes, without limitation, the pricing for the electric power used and a transaction fee. Alternatively, the billing agency, for example, and without limitation, UtilCo1 304, UtilCo2 310, UtilCoN 312, and consortium 316, may simply apply a flat fee for each charge of EV 205. Therefore, utility bill 306 includes one of itemized and total billing associated with charging EV 205.

A commercial relationship, for example, a hotel chain relationship 320, includes vehicle charging system 200 communicatively coupled to a hotel server 110 via communications network 106. In at least some embodiments of AMI system 100, relationship 320 exists between the hotel chain (not shown) and user 260 that is an existing resident of the hotel chain. In such embodiments, vehicle charging system 200 is positioned on the hotel property (not shown). In some such embodiments, an electric utility, e.g., UtilCo1 304 owns vehicle charging system 200, and a relationship similar to relationship 302 exists. This is a likely scenario for smaller hotel chains that do not want to accept the additional administration of operation and the associated risks. Alternatively, for those hotel chains large enough to assume the management and risk, the billing for charging of EV 205 by the hotel resident is transmitted to hotel server 110 via a card 250, that may be a hotel key card, to a standard hotel room bill 322 generated by the hotel. In general, current hotel key cards are not capable of such transactions. Therefore, additional programming of hotel server 110 and additional information transmitted to the hotel key cards may be used.

Hotel room bill 322 may include billing associated with charging EV 205 that include, without limitation, the pricing for the electric power used and a transaction fee. Alternatively, the hotel may simply apply a flat fee for each charge of EV 205. Therefore, hotel room bill 322 includes one of itemized and total billing associated with charging EV 205.

In some embodiments, the hotel chain may simply default to use of utility cards, credit cards, and debit cards for card 250 that is used with card reader 245. To prevent non-guests of the hotel from using vehicle charging system 200 located on its property, the hotel may require additional data to be entered via a keypad, such information only available to a hotel guest, such information being a unique set of alphanumerics, for example, and without limitation, a room identification string generated by hotel server 110.

Further, in some such embodiments, UtilCo1 304 may elect to use those smart grid features that allow UtilCo1 304 to disrupt charging of EV 205 if localized electric power demand and/or loading of local transmission and distribution (T&D) equipment (not shown) needs to be maintained at a predetermined value to avoid potential overloading of the local T&D system.

Other commercial relationships may include, for example, and without limitation, restaurant parking, shopping mall parking, and commercial parking garages/decks. Charging EV 205 while parked at one of these establishments lends itself to a purely credit/debit card company (hereinafter referred to as a CreditCo 330) relationship 332. Such CreditCo relationship 332 includes vehicle charging system 200 communicatively coupled to a CreditCo server 110 via communications network 106. In general, owners of restaurants and shopping malls will most likely not want to be directly associated with vehicle charging systems 200, and will default to card reader 245 accepting one of a card 250 issued by UtilCo1 304 or CreditCo 330. Specifically, in some such embodiments, an electric utility, e.g., UtilCo1 304 owns vehicle charging system 200, and a relationship similar to relationship 302 exists.

Alternatively, in some embodiments, regardless of who owns vehicle charging system 200, payment with a card 250 issued by CreditCo 330 may be the only option. In at least some of these embodiments, for example, those embodiments associated with a parking garage may include additional communications interfaces and links with the payments systems used upon exit of the parking garage. In these embodiments, the billing for charging EV 205 is simply added to the overall parking billing that is paid upon exit.

Also, alternatively, in some embodiments, the billing for charging EV 205 will be on the next card statement 334 as either a charge or debit line item.

Regardless of how the billing is ultimately billed to user 260, charging activities of EV 205 include billing that includes, without limitation, the pricing for the electric power used and a transaction fee. Alternatively, a flat fee for each charge of EV 205 may be applied to the parking receipt and/or card statement 334. Therefore, the billing to user 260 includes one of itemized and total billing associated with charging EV 205.

Further, in some such embodiments, UtilCo1 304 may elect to use those smart grid features that allow UtilCo1 304 to disrupt charging of EV 205 if localized electric power demand and/or loading of local transmission and distribution (T&D) equipment (not shown) needs to be maintained at a predetermined value to avoid potential overloading of the local T&D system.

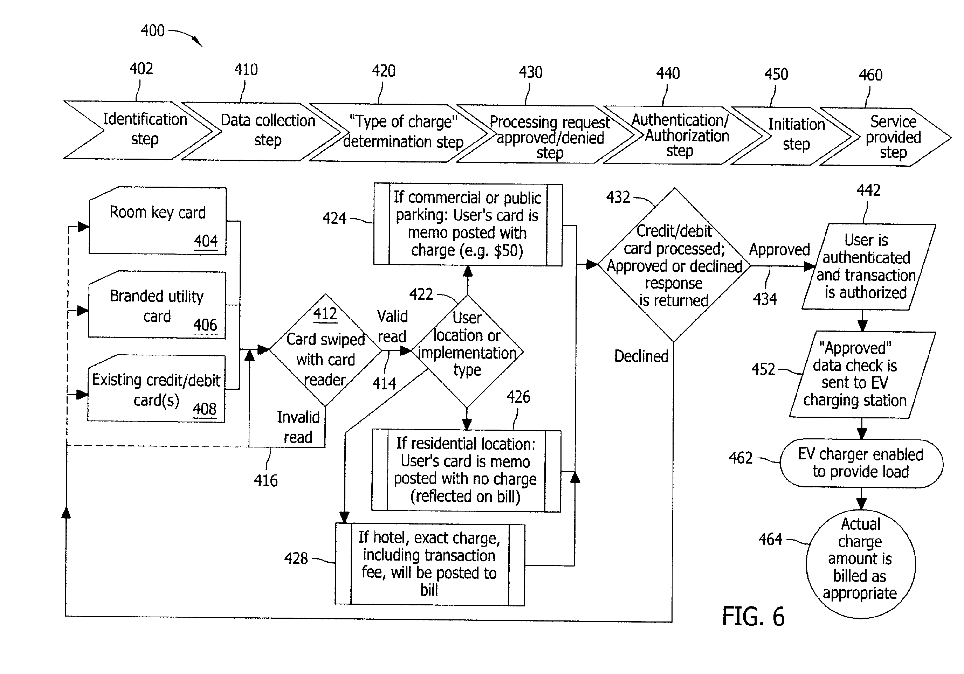

FIG. 6 is a flowchart of an example method 400 for use in initiating charging of EV 205 (shown in FIG. 4) using vehicle charging system (shown in FIG. 4) and AMI system 100 (shown in FIG. 1).

In the example embodiment, method 400 includes an identification step 402. Step 402 includes user 260 (shown in FIGs. 4 and 5) using card 250 (shown in FIG. 4) and running card 250 through card reader 245 (shown in FIGs. 4 and 5). Card 250 is any card-type device that enables operation of AMI system 100 as described, including, without limitation, a hotel key card 404, a branded utility card 406, and a credit/debit card 408.

Method 400 also includes a data collection step 410, wherein data is pulled from card 250 and a determination 412 is made if there was a valid read 414 of card 250, or an invalid read 416. In the event of an invalid read 416, identification step 402 will need to be performed again, possibly with a card 250 different than the card 250 used with the most recent attempt.

Method 400 further includes a "type of charge" determination step 420, wherein a determination 422 is made as to method of authentication and authentication based upon location of, and ownership of, the particular vehicle charging system 200. Moreover, such determination 422 may also include the type of implementation, e.g., type of card 250 used, as a determining factor. For example, if the particular vehicle charging system 200 is located at a commercial or public parking facility, the account associated with card 250 for user 260 is memo posted 424 with a predetermined placeholder charge value, e.g., $50.00. Such placeholder, or memo posted charge will be replaced by the actual charge, including a transaction fee, prior to billing of user 260 by the billing authority as described above in FIG. 5. Also, for example, if the particular vehicle charging system 200 is located at a residence, the account associated with card 250 for residential user 260 is memo posted 426 without a charge value. The actual electric power usage, and possibly a transaction fee, will be a line item on utility bill 306 (shown in FIG. 5) as described above in FIG. 5. Further, for example, if the particular vehicle charging system 200 is located at a hotel, the pending billing for the room number associated with room key card 250 for guest user 260 is memo posted 428 without a charge value. The actual charge, including transaction fees, will be a line item on room bill 322 (shown in FIG. 5) as described above in FIG. 5.

Method 400 also includes a processing request approved/denied step 430, wherein the request to use vehicle charging system 200 is either approved or denied. Processing request approved/denied step 430 facilitates determining which economic entity will accept the liability of the charges pending upon completion of the charge of EV 205. For example, either UtilCo1 304 or CreditCo 330 (both shown in FIG. 5) may accept the liability for payment based on criteria discussed further below.

In the example embodiment, card reader 245 (shown in FIGs. 4 and 5) receives credentials from user 260 via card 250, or via a keyboard, a touch screen, (neither shown) and/or wireless transmission device 255 (shown in FIG. 4). The credentials may include, without limitation, an account identifier, a personal identification number (PIN), payment account information (e.g., a payment account ID), and/or any other information associated with user 260. Card reader 245 facilitates validation of the credentials by transmitting an authentication request including the credentials to server 110 (shown in FIG. 1) and receiving an authentication response 432 from server 110. In the example embodiment, both the authentication request and the authentication response 432 are transmitted across communications network 106 (shown in FIG. 1) of AMI system 100. In one embodiment, server 110 stores credentials associated with a collection of authorized users. In response to receiving an authentication request, server 110 compares the received credentials to the stored credentials and may transmit a positive authentication response if the two match. Server 110 will also verify the status of the account of user 260, e.g., verify that user 260 is a customer in good standing, e.g., user's 260 account has sufficient funds and is without delinquent payments due.

If the two requirements that include user authentication and satisfactory account standing are met, a positive authentication response 434 is transmitted from server 110 to charging device 210 across communications network 106 of AMI system 100. Such positive authentication response 434 is used as at least one discrete input to authorize use of charging device 210. If the received credentials do not match the stored credentials, or the account is not in good standing, server 110 transmits a negative authentication response 436 that will result in a declination of card acceptance and a denial of authorization to use charging device 210. In the event of such declination 436, user 260 will be directed to return to identification step 402 and possibly use another card 250.

In some embodiments, a first server 110 may transfer the authorization request to a second server 110. First server 110 may determine where the request for authorization, and subsequent billing, should be sent on a hierarchal basis as a function of at least one of a current status of the account of user 260, an availability of sufficient funds to the account of user 260, and at least one available default alternative payment option. For example, AMI system 100 may direct the authorization request to UtilCo1 304 (shown in FIG. 5), that may in turn automatically redirect the request for authorization to CreditCo 330 (shown in FIG. 5) because the utility account of user 260 is not in good standing.

Method 400 also includes an authentication and authorization step 440, wherein user 260 receives positive authentication response 434 from server 110 across communications network 106 of AMI system 100, including permission to use charging device 210, is authorized 442 for the pricing presented to user 260 for charging EV 205.

Method 400 further includes an initiation step 450, wherein the request to use vehicle charging system 200 is approved 452 and a discrete signal to initiate use of charging device 210 is transmitted from server 110 across communications network 106 of AMI system 100 to charging device 210. The remainder of the logic necessary to physically initiate operation of charging station 200 is embedded within charging device 210 as described above.

Method 400 also includes a service provided step 460, wherein charging device 210 is energized from power source 235 (shown in FIG. 4) and is enabled 462 to transmit electric power to EV 205. The logic necessary to physically initiate, control, and terminate operation of charging station 200 is embedded within charging device 210 as described above. For example, the rate, time, and amount of charging of EV 205 is recorded by charging device 210 and is transmitted to server 100 via communications network 106 of AMI system 100. Upon completion of charging EV 205, the actual billing amount (as described above) is billed 462 as appropriate.

In contrast to known smart grids, and their associated Advanced Metering Infrastructure (AMI) systems, the systems and methods described herein use the associated backbone communications network to transmit transactions thereon. Specifically, in contrast to known smart grids and their AMI systems, the systems and methods described herein facilitate eliminating additional transaction systems and the additional infrastructure, including the associated specialized equipment. Also, specifically, in contrast to known smart grids and their AMI systems, the systems and methods described herein facilitate enabling the backbone communication network of the smart grid to identify and/or authenticate the user and to authorize the transaction prior to allowing charging of an electric vehicle. Therefore, the additional infrastructure requiring additional capital and operational costs for implementation and installation is not necessary. Furthermore, in contrast to known smart grids and their AMI systems, the systems and methods described herein facilitate eliminating malfunctions of the specialized equipment, and/or additional processing delays due to system interface latencies, thereby reducing a potential for inconveniencing the owner/operator of the vehicle charging devices, as well as the customers.

Embodiments of computer-based smart grids, and specifically their associated Advanced Metering Infrastructure (AMI) systems, as provided herein, facilitate providing additional capabilities to existing infrastructure. More specifically, the AMI systems described herein use the existing backbone communications network to transmit transaction information thereon. Therefore, the AMI systems described herein facilitate eliminating additional transaction systems and the additional infrastructure, including the associated specialized equipment. Moreover, the AMI systems described herein facilitate enabling the backbone communication network of the smart grid network to identify and/or authenticate the user and to authorize the transaction prior to allowing charging of an electric vehicle. Therefore, the additional infrastructure requiring additional capital and operational costs for implementation and installation is not necessary. Furthermore, the AMI systems described herein facilitate eliminating malfunctions of the specialized equipment, and/or additional processing delays due to system interface latencies, thereby reducing a potential for inconveniencing the owner/operator of the vehicle charging devices, as well as the customers. Moreover, the AMI systems as described herein provide a potential for an additional revenue stream in the form of transaction fees to a billing authority, for example an electric utility and/or a hotel chain. Therefore, since the AMI systems described herein are provided, operated, and controlled by a billing authority, the billing and fees associated with the transactions are not shared with third-party providers.

An example technical effect of the systems and methods described herein includes at least one of (a) adding additional capabilities to existing smart grids, and specifically, the associated Advanced Metering Infrastructure (AMI) systems, thereby using the existing backbone communications network to transmit transaction thereon; (b) eliminating additional transaction systems and the additional infrastructure, including the associated specialized equipment, as well as the malfunctions and processing delays therewith; (c) enabling the backbone communications network of the smart grid to identify and/or authenticate the user and to authorize the transaction prior to allowing charging of an electric vehicle; and (d) enabling additional revenue streams in the form of transaction fees to the owner/operator of the smart grid and/or an associated billing authority.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assemblies and methods.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above represent examples only, and thus are not intended to limit in any way the definition and/or meaning of the term processor.

While the invention has been described in terms of various specific embodiments, those skilled in the art will recognize that the invention can be practiced with modification within the scope of the claims.

## Claims

1. A system (101) for use in authorizing charging of an electrically powered vehicle (205), said system comprising:
a smart grid (100; 106) comprising an advanced metering infrastructure (AMI) system (100) comprising:
at least one credential reading device (245) coupled to a charging device (210) for an electrically powered vehicle, said at least one credential reading device configured to transmit credential information; and
a server system (102) comprising at least one server (110) coupled to said at least one credential reading device via a communications network (106), said at least one server configured to determine validity of the credential information transmitted from said at least one credential reading device, said at least one server further configured to one of permit and deny charging of the electrically powered vehicle.

2. A system (101) in accordance with Claim 1, wherein said AMI system (100) is configured to transmit encrypted credential information.

3. A system (101) in accordance with Claim 1 or Claim 2, wherein said at least one server (110) is configured to determine at least one of itemized and total pricing associated with charging the electrically powered vehicle (205).

4. A system (101) in accordance with Claim 3, wherein said at least one server (110) is further configured to authorize a financial transaction for the pricing determined for charging the electrically powered vehicle (205).

5. A system (101) in accordance with Claim 4, wherein said at least one server (110) is further configured to determine where a request for authorization of the financial transaction will be directed on a hierarchal basis as a function of at least one of:
a current status of a user's account;
an availability of sufficient funds to the user's account; and
at least one available alternative payment option.

6. A system (101) in accordance with Claim 4 or Claim 5, wherein said at least one server (110) is further configured to collect payment information for billing the charge of the electrically powered vehicle (205) from said charging device (210) and direct the billing to at least one of a utility bill (306), a hotel room bill (322), a credit card statement (334), a banking debit card statement (334), and a vehicle parking bill (334).

7. A system (101) in accordance with any preceding Claim, wherein said at least one server (110) is at least one of an electric utility company server, a hotel server, a credit card company server, and a bank card server.

8. A system (101) in accordance with any preceding Claim, wherein said at least one credential reading device (245) comprises a card reader (245) configured to read at least one of a utility card (406), a hotel room key card (404), a credit card (408), and a debit card (408).

9. A method for use in charging an electrically powered vehicle (205), said method comprising:
transmitting user credential information from a vehicle charging system to at least one server (110) over a smart grid communications network (100; 106) that includes an advanced metering infrastructure (AMI) system (100);
determining a validity of the user credential information transmitted from the vehicle charging system; and
one of permitting and denying a charge of the electrically powered vehicle (205) by the user at the vehicle charging system.

10. A method in accordance with Claim 9, wherein transmitting user credential information from a vehicle charging system comprises a credential reading device reading at least one of a branded utility card, a hotel room key card, a credit card, and a debit card.

11. A method in accordance with Claim 9 or Claim 10, wherein transmitting user credential information from a vehicle charging system to at least one server (110) comprises transmitting the user credential information to at least one of an electric utility company server, a hotel server, a credit card company server, and a bank card server.

12. A method in accordance with Claim 9, 10 or 11, wherein determining a validity of the user credential information comprises determining the at least one server (110) for which a request for authorization of a financial transaction will be directed, the at least one server associated with at least one user account.

13. A method in accordance with Claim 12, wherein determining the at least one server (110) comprises directing the authorization request on a hierarchal basis as a function of at least one of:
a current status of the at least one user account;
an availability of sufficient funds to the at least one user account; and
at least one available alternative payment option.

14. A method in accordance with any one of Claims 9 to 13, wherein permitting a charge of the electrically powered vehicle by the user comprises:
collecting payment information for billing the charge of the electrically powered vehicle (205) from the vehicle charging system; and
directing the billing to at least one of a utility bill, a hotel room bill, a credit card statement, a banking debit card statement, and a vehicle parking bill.

15. A method in accordance with any one of Claims 9 to 14, wherein determining a validity of the user credential information comprises at least one of:
determining at least one of itemized and total pricing associated with charging the electrically powered vehicle (205);
determining at least one economic entity that will accept liability for payment associated with charging the electrically powered vehicle (205); and
authorizing a financial transaction for the pricing determined for charging the electrically powered vehicle (205).

16. One or more non-transitory computer-readable storage media (120/122) having computer-executable instructions embodied thereon, wherein when executed by at least one processor (122), the computer-executable instructions cause the at least one processor to perform a method in accordance with any one of Claims 9 to 15.
